# EUROPEAN PATENT APPLICATION

(11) **EP 4 557 834 A2**
(43) Date of publication of application: **21.05.2025**
(21) Application number: 25166409.0
(22) Date of filing: 09.09.2022
(51) Int. Cl.: H04W 40/24

(54) **COMMUNICATION SYSTEM, CONTROLLER, PROGRAM, AND INFORMATION PROCESSING METHOD**

(30) Priority: 14.09.2021 JP 2021149226; 03.03.2022 JP 2022032289
(62) Divisional of application: 22869906.2
(71) Applicant: Softbank Corp., Tokyo 105-7529 (JP)
(72) Inventor: MATSUSHIMA, Satoru, Tokyo, 105-7529 (JP)
(74) Representative: Michalski Hüttermann & Partner Patentanwälte mbB

(57) **Abstract**

Provided is a communication system including: a controller; and an SR gateway which converts an SRv6-compliant packet received from an IP network into a GTP-U-compliant packet. The SR gateway includes a notification unit which notifies the controller, and a router connected to an IP network, of a route including an IP prefix including an address of a reachable gNB in NLRI and an SID of the SR gateway in a BGP attribute, and the controller includes a storage unit which stores an IP prefix including the address of the gNB, and a SID of the SR gateway, in association with each other, and an advertisement unit which searches the storage unit by using, as a key, an address of a gNB included in a UE session information in SMF notified when UE is attached, and when a match is found, advertises route information of the UE to the router.

## Description

### BACKGROUND

### 1. TECHNICAL FIELD

The present invention relates to a communication system, a controller, a program, and an information processing method.

### 2. RELATED ART

Patent Document 1 describes slicing in a mobile network conforming to 5th Generation (5G).

### PRIOR ART DOCUMENTS

### PATENT DOCUMENT

Patent Document 1: Japanese Patent Application Publication No. 2019-176384

### GENERAL DISCLOSURE

According to an embodiment of the present invention, there is a communication system. The communication system may include a controller. The communication system may include an SR gateway which converts an SRv6-compliant packet received from an IP network into a GTP-U-compliant packet. The SR gateway may include a notification unit which notifies the controller, and a router connected to an IP network, of an A-D route including an IP prefix including an address of a connected gNB in NLRI and an SID of the SR gateway in a BGP attribute. The controller may include a storage unit which stores an IP prefix including the address of the gNB, and the SID of the SR gateway, in association with each other. The controller may include an advertisement unit which searches the storage unit by using, as a key, an address of a gNB included in a PFCP session notified when UE is attached, and when a match is found, advertises route information of the UE to the router.

The notification unit may notify the controller and the router of the A-D route including the address of the connected gNB in an EP of the NLRI, and the SID of the SR gateway. The advertisement unit may add a community attribute to be imported by the router to route information of the UE and advertise the route information of the UE to the router, in order for the router to receive the route information and register a route destined for the UE in a route table of the router. The advertisement unit may add, to the route information of the UE, the different community attribute for each core network instance included in the PFCP session. The advertisement unit may add, to the route information of the UE, the different community attribute for each group of the gNB included in the PFCP session. The advertisement unit may store, as the route information of the UE, an IP prefix including an address of the UE, an IP address of the gNB, a TEID, and a QFI and an RQI, which are included in the PFCP session, in at least one of NLRI or Nexthop-Address in an MP_REACH_NLRI attribute. When the NLRI is VPNv4 Unicast or VPNv6 Unicast address family, the advertisement unit may store the TEID of 4 bytes, the QFI and the RQI of 1 byte, 0 of 3 bytes in order, or store 0 of 3 bytes, the TEID of 4 bytes, and the QFI and the RQI of 1 byte in order in a leading 8-byte long RD portion in the Nexthop-Address, and store an IP address of the gNB in an IP address portion of the Nexthop-Address, and may not store the TEID, and the QFI and the RQI in the NLRI. When an effective bit length of the TEID is 16 bits or less and when the NLRI is VPNv4 Unicast or VPNv6 Unicast address family, the advertisement unit may store a QFI and an RQI of 1 byte and the TEID of 2 bytes in a 24-bit length label portion of the NLRI, fill an entire RD portion of the Nexthop-Address with 0, and store an IP address of the gNB in an IP address portion of the Nexthop-Address. The advertisement unit may store, in a Prefix-SID attribute, an SID value in which an IP address of the gNB, a QFI and an RQI, and a TEID, which are included in the PFCP session, are written in advance, as GTP4.E or GTP6.E in an Argument portion subsequent to a Locator and a Function portion of an SID corresponding to a conversion unit of the SR gateway, and may store an IP prefix including an address of the UE and an IP address of the gNB, which are included in the PFCP session, in NLRI and Nexthop-Address in an MP_REACH_NLRI attribute, respectively, without storing a TEID. The notification unit may notify the controller of the A-D route including slice identification information, which allows identification of a slice corresponding to the UE, in a color attribute.

The communication system may further include the router, and in at least one of a case where the A-D route including an address of the gNB disappears or a case where it is determined that an A-D route advertised by an SR gateway other than the SR gateway is optimal as an A-D route of route information of the UE, the router may autonomously link an SID addressed to the UE by an SID of an optimal A-D route without waiting for advertisement of UE route update of the UE from the controller.

The communication system may further include the router, and the router may include an ADRDB, which is a routing table, for searching for an A-D route received from the SR gateway. The ADRDB may be a global routing table of the router. The ADRDB may be a VRF which imports the A-D route by a value of a community attribute added to the A-D route. The router may evaluate a value of a community attribute added to the A-D route on the basis of a different community attribute for each group of gNB, which is registered in advance, and import the A-D route to the ADRDB.

According to an embodiment of the present invention, there is a controller. The controller may include a receiving unit which receives notification information that notifies an A-D route including an IP prefix including an address of a connected gNB in NLRI and an SID of the SR gateway in a BGP attribute, from an SR gateway which converts an SRv6-compliant packet received from an IP network into a GTP-U-compliant packet. The controller may include a storage unit which stores an IP prefix of a VRF including the address of the gNB, and the SID of the SR gateway, in association with each other. The controller may include an advertisement unit which searches the storage unit by using, as a key, an address of a gNB included in a PFCP session notified when UE is attached, and when a match is found, advertises route information of the UE to a router connected to an IP network.

According to an embodiment of the present invention, there is provided a program for causing a computer to function as the controller.

According to an embodiment of the present invention, there is an information processing method which is executed by a computer. The information processing method may include receiving notification information that notifies an A-D route including an IP prefix including an address of a connected gNB in NLRI and an SID of the SR gateway in a BGP attribute, from an SR gateway which converts an SRv6-compliant packet received from an IP network into a GTP-U-compliant packet. The information processing method may include storing, in a storage unit, an prefix of a VRF including the address of the gNB, and the SID of the SR gateway, in association with each other. The information processing method may include advertising, by searching the storage unit by using, as a key, an address of a gNB included in a PFCP session notified when UE is attached, and when a match is found, advertising route information of the UE to a router connected to an IP network.

According to an embodiment of the present invention, there is a communication system. The communication system may include a controller. The communication system may include an SR gateway which converts an SRv6-compliant packet received from an IP network into a GTP-U-compliant packet. The controller may include a generation unit which generates an SR policy including information, which indicates a conversion function from SRv6 to GTP-U, and an SID for UE in a BSID and including an SID of a VRF corresponding to a gNB accommodating the UE in an EP of NLRI. The controller may include a notification unit which notifies the SR gateway of the SR policy. The SR gateway may include an SR policy storage unit which stores the SR policy received from the controller. The SR gateway may include a packet transfer unit which, when receiving a packet including an SID for the UE, specifies, on the basis of the SR policy, an SID of a VRF corresponding to the SID for the UE, and transfers the packet.

The communication system may include a PE router, and the PE router may import, as a route of a UPF, an SID of a VRF corresponding to the UPF, and when receiving notification of arrival of a packet addressed to the UE, transfer, to the UPF, the packet addressed to the UE. When the UE transitions to an idle state, the PE router may switch transfer of a packet addressed to the UE from transfer by longest match to transfer by short prefix route. The SR gateway may include an advertisement control unit which controls advertisement of route information to the controller, and the advertisement control unit may perform control so as to, when advertising the route information indicating a route of a gNB to the controller, advertise information, which allows identification that a route is a gNB route, to the controller together, and when advertising the route information indicating a route of a UPF to the controller, advertise information, which allows identification that a route is a UPF route, to the controller together.

According to an embodiment of the present invention, there is provided a communication system. The communication system may include a controller, a first node, and a second node. The first node may include a first SR policy transmission unit which, when connected to a gNB, transmits, to the controller, an SR policy including an address of the gNB in an EP of NLRI, including slice identification information, which allows identification of a slice, in color, and including an SID, which corresponds to the slice, in a BSID. The second node may include a second SR policy transmission unit which, when connected to a UPF, transmits, to the controller, an SR policy including an address of the UPF in an EP of NLRI, including slice identification information, which allows identification of a slice, in color, and including an SID, which corresponds to the slice, in a BSID. The controller may include a link information storage unit which stores link information which links a network instance with color. The controller may include an advertisement unit which searches the link information storage unit by using, as a key, color among advertised information, specify the network instance corresponding to the color, specify an address of a gNB and an address of a UPF corresponding to the network instance specified, generate a route of the gNB to advertise the route to a VRF corresponding to the UPF, and generate a route of the UPF to advertise the route to a VRF corresponding to the gNB.

The summary clause does not necessarily describe all necessary features of the embodiments of the present invention. The present invention may also be a sub-combination of the features described above. Especially the invention also relates to the following apects:
1. A communication system comprising:
   a controller; and
   an SR gateway which converts an SRv6-compliant packet received from an IP network into a GTP-U-compliant packet, wherein
   the SR gateway includes
   a notification unit which notifies the controller, and a router connected to an IP network, of a route including an IP prefix including an address of a reachable gNB in NLRI and an SID of the SR gateway in a BGP attribute, and
   the controller includes
   a storage unit which stores an IP prefix including the address of the gNB, and a SID of the SR gateway, in association with each other, and
   an advertisement unit which searches the storage unit by using, as a key, an address of a gNB included in a UE session information in SMF notified when UE is attached, and when a match is found, advertises route information of the UE to the router.
2. The communication system according to aspect 1, wherein the advertisement unit advertises route information of the UE to the SR gateway.
3. The communication system according to aspect 1, wherein the notification unit notifies the controller and the router of the route including the address of the reachable gNB in an EP of the NLRI, and the SID of the SR gateway.
4. The communication system according to aspect 1, wherein the NLRI in the route includes RD of a VRF which is configured to import the route information of the UE in the SR gateway.
5. The communication system according to aspect 4, wherein the SID in the route indicates the VRF configured to import the UE route information in the SR gateway.
6. The communication system according to aspect 1 to 3, wherein the advertisement unit adds a community attribute to be imported by the router to route information of the UE and advertises the route information to the router, in order for the router to receive the route information of the UE and register a route destined for the UE in a routing table of the router.
7. The communication system according to aspect 6, wherein the advertisement unit adds, to the route information of the UE, the different community attribute for each core network instance included in the UE session information.
8. The communication system according to aspect 6, wherein the advertisement unit adds, to the route information of the UE, the different community attribute for each group of the gNB included in the UE session information.
9. The communication system according to any one of aspects 1 to 5, wherein the advertisement unit stores, as the route information of the UE, an IP prefix including an address of the UE, an IP address of the gNB, a TEID, and a QFI and an RQI, which are included in the UE session information, in at least one of NLRI or Nexthop-Address in an MP_REACH_NLRI attribute.
10. The communication system according to aspect 4, wherein when the NLRI is VPNv4 Unicast or VPNv6 Unicast address family, the advertisement unit stores, as the route information of the UE, an IP prefix including UE IP address in NLRI in an MP_REACH_NLRI attribute.
11. The communication system according to aspect 9, wherein when the NLRI is VPNv4 Unicast or VPNv6 Unicast address family, the advertisement unit stores the TEID of 4 bytes, the QFI and the RQI of 1 byte, 0 of 3 bytes in order, or stores 0 of 3 bytes, the TEID of 4 bytes, and the QFI and the RQI of 1 byte in order in a leading 8-byte long RD portion in the Nexthop-Address, stores an IP address of the gNB in an IP address portion of the Nexthop-Address, and does not store the TEID, and the QFI and the RQI in the NLRI.
12. The communication system according to aspect 9, wherein when an effective bit length of the TEID is 16 bits or less and when the NLRI is VPNv4 Unicast or VPNv6 Unicast address family, the advertisement unit stores a QFI and an RQI of 1 byte and the TEID of 2 bytes in a 24-bit length label portion of the NLRI, fills an entire RD portion of the Nexthop-Address with 0, and stores an IP address of the gNB in an IP address portion of the Nexthop-Address.
13. The communication system according to any one of aspects 1 to 12, wherein the advertisement unit stores, in a Prefix-SID attribute, an SID value in which an IP address of the gNB, a QFI and an RQI, and a TEID, which are included in the UE session information, are written in advance, as GTP4.E or GTP6.E in an Argument portion subsequent to a Locator and a Function portion of an SID corresponding to a conversion unit of the SR gateway, and stores an IP prefix including an address of the UE and an IP address of the gNB, which are included in the UE session information, in NLRI in an MP_REACH_NLRI attribute.
14. The communication system according to aspect 1, wherein the router writes at least one of the gNB address, the TEID, the QFI, and the RQI, which are stored in route information of the UE received from the controller, in an Argument portion of the SID stored in the route information, and updates the SID to be used for packet transfer to the IP prefix of the UE.
15. The communication system according to any one of aspects 1 to 14, wherein the notification unit notifies the controller of the route including slice identification information, which allows identification of a slice corresponding to the UE, in a color attribute.
16. The communication system according to any one of aspects 1 to 15, further comprising
   the router, wherein
   when the route including an address of the gNB disappears, the router autonomously deletes a route of the UE without waiting for advertisement of route deletion from the controller.
17. The communication system according to aspect 1, wherein
   when the route including an address of the gNB disappears, the notification unit autonomously advertises a route deletion of the UE without deletion of the UE session information in SMF.
18. The communication system according to aspect 16, wherein the router autonomously deletes all UE routes, which are held by the route having disappeared, other than the route of the UE without waiting for advertisement of route deletion from the controller.
19. The communication system according to aspect 2, wherein the notification unit autonomously advertises route deletions of all UE routes, which are held by the route having disappeared, other than the route of the UE without deletion of the UE session information in SMF.
20. The communication system according to any one of aspects 1 to 15, further comprising
   the router, wherein
   in at least one of a case where the route including an address of the gNB disappears or a case where it is determined that a route advertised by an SR gateway other than the SR gateway is optimal as a route of route information of the UE, the router autonomously links an SID addressed to the UE by an SID of an optimal A-D route without waiting for advertisement of UE route update of the UE from the controller.
21. The communication system according to aspect 1, wherein the notification unit
   in at least one of a case where the route including an address of the gNB disappears or a case where it is determined that a route advertised by an SR gateway other than the SR gateway is optimal as a route of route information of the UE, the notification unit autonomously links an SID addressed to the UE by an SID of an optimalroute without waiting deletion, or update of the UE session information in SMF.
22. The communication system according to any one of aspects 1 to 15, further comprising
   the router, wherein
   the router includes an ADRDB, which is a routing table, for searching for a route received from the SR gateway.
23. The communication system according to aspects 1, wherein
   the controller includes a storage, which is a routing table, for searching for a route received from the SR gateway.
24. The communication system according to aspect 22, wherein the ADRDB is a global routing table of the router.
25. The communication system according to aspect 23, wherein the storage is a global routing table of the controller.
26. The communication system according to aspect 22, wherein the ADRDB is a VRF which imports the route by a value of a community attribute added to the route.
27. The communication system according to aspect 23, wherein the storage is a VRF which imports the route by a value of a community attribute added to the route.
28. The communication system according to aspect 26, wherein
   the router evaluates a value of a community attribute added to the route on a basis of a different community attribute for each group of gNB, which is registered in advance, and imports the route to the ADRDB.
29. The communication system according to aspect 27, wherein
   the controller evaluates a value of a community attribute added to the route on a basis of a different community attribute for each group of gNB, which is registered in advance, and imports the route to the storage.
30. A controller comprising:
   a receiving unit which receives notification information that notifies a route including an IP prefix including an address of a reachable gNB in NLRI and an SID of the SR gateway in a BGP attribute, from an SR gateway which converts an SRv6-compliant packet received from an IP network into a GTP-U-compliant packet;
   a storage unit which stores an IP prefix including the address of the gNB, and the SID of the SR gateway, in association with each other; and
   an advertisement unit which searches the storage unit by using, as a key, an address of a gNB included in a UE session information notified in SMF when UE is attached, and when a match is found, advertises route information of the UE to a router connected to an IP network.
31. A program for causing a computer to function as the controller according to aspect 30.
32. A router comprising:
   a functionality which writes at least one of the gNB address, the TEID, the QFI, and the RQI, which are stored in route information of the UE received from a controller, in an Argument portion of the SID stored in the route information, and updates the SID to be used for packet transfer to the IP prefix of the UE.
33. An information processing method comprising:
   receiving notification information that notifies a route including an IP prefix including an address of a reachable gNB in NLRI and an SID of the SR gateway in a BGP attribute, from an SR gateway which converts an SRv6-compliant packet received from an IP network into a GTP-U-compliant packet;
   storing, in a storage unit, an IP prefix including the address of the gNB, and the SID of the SR gateway, in association with each other; and
   advertising, by searching the storage unit by using, as a key, an address of a gNB included in a UE session information notified when UE is attached, and when a match is found, advertising route information of the UE to a router connected to an IP network.
34. A communication system comprising:
   a controller; and
   an SR gateway which converts an SRv6-compliant packet received from an IP network into a GTP-U-compliant packet, wherein
   the controller includes
   a generation unit which generates an SR policy including information, which indicates a conversion function from SRv6 to GTP-U, and an SID for UE in a BSID and including an SID of a VRF corresponding to a gNB accommodating the UE in an EP of NLRI, and
   a notification unit which notifies the SR gateway of the SR policy, and
   the SR gateway includes
   an SR policy storage unit which stores the SR policy notified from the controller, and
   a packet transfer unit which, when receiving a packet including an SID for the UE, specifies, on a basis of the SR policy, an SID of a VRF corresponding to the SID for the UE, and transfers the packet.
35. The communication system according to aspect 21, comprising
   a PE router, wherein
   the PE router imports, as a route of a prefix including a UE, an SID of a VRF corresponding to the UPF which serving the UE, and when receiving notification of arrival of a packet addressed to the UE, transfers, to the UPF, the packet addressed to the UE.
36. The communication system according to aspect 1, wherein when the UE transitions to an idle state, the PE router switches transfer of a packet addressed to the UE from transfer by longest match to transfer by short prefix route.
37. The communication system according to aspect 34, wherein
   the SR gateway includes
   an advertisement control unit which controls advertisement of route information to the controller, and
   the advertisement control unit performs control so as to, when advertising the route information indicating a route of a gNB to the controller, advertise information, which allows identification that a route is a gNB route, to the controller together, and when advertising the route information indicating a route of a UPF to the controller, advertise information, which allows identification that a route is a UPF route, to the controller together.
38. A communication system comprising:
   a controller;
   a first node; and
   a second node, wherein
   the first node includes
   a first SR policy transmission unit which, when connected to a gNB, transmits, to the controller, an SR policy including an address of the gNB in an EP of NLRI, including slice identification information, which allows identification of a slice, in color, and including an SID, which corresponds to the slice, in a BSID,
   the second node includes
   a second SR policy transmission unit which, when connected to a UPF, transmits, to the controller, an SR policy including an address of the UPF in an EP of NLRI, including slice identification information, which allows identification of a slice, in color, and including an SID, which corresponds to the slice, in a BSID, and
   the controller includes
   a link information storage unit which stores link information which links a network instance with color, and
   an advertisement unit which searches the link information storage unit by using, as a key, color among advertised information, specifies the network instance corresponding to the color, specifies an address of a gNB and an address of a UPF corresponding to the network instance specified, generates a route of the gNB to advertise the route to a VRF corresponding to the UPF, and generates a route of the UPF to advertise the route to a VRF corresponding to the gNB.

### BRIEF DESCRIPTION OF THE DRAWINGS

Fig. 1 schematically illustrates an example of a configuration of a communication system 10.
Fig. 2 is an explanatory diagram for explaining processing contents in the communication system 10.
Fig. 3 is an explanatory diagram for explaining the processing contents in the communication system 10.
Fig. 4 is an explanatory diagram for explaining the processing contents in the communication system 10.
Fig. 5 schematically illustrates an example of a functional configuration of an N4BGPC 300 and a logical configuration of a conversion unit 450.
Fig. 6 schematically illustrates an example of another configuration of the communication system 10.
Fig. 7 schematically illustrates an example of a hardware configuration of a computer 1200 that functions as the N4BGPC 300, an SRGW 400, or an N4BGPC 600.

### DESCRIPTION OF EXEMPLARY EMBODIMENTS

Techniques for identifying network slices in a mobile network are known, but have been closed within the mobile network. Although it is desirable to be able to manage network slices including an IP network, setting of route information or the like may be considerably complicated. A communication system 10 according to the present embodiment provides a technique for reducing the complication of the setting.

Hereinafter, the present invention will be described through embodiments of the invention, but the following embodiments do not limit the invention according to the claims. In addition, not all of the combinations of features described in the embodiments are essential to the solving means of the invention.

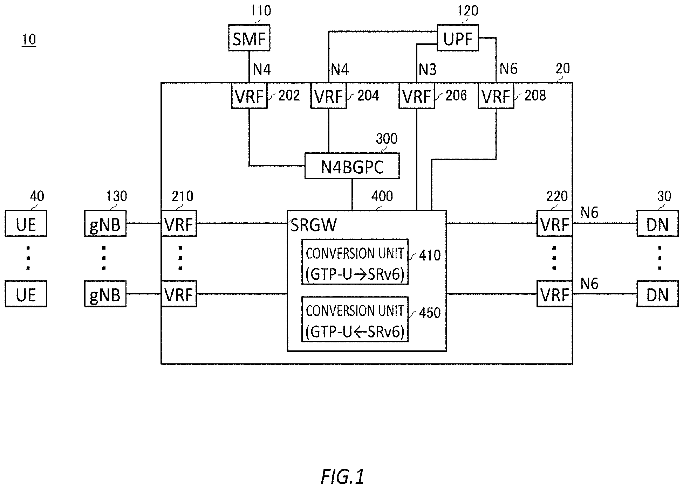

Fig. 1 schematically illustrates an example of a configuration of the communication system 10. The communication system 10 includes an N4 border gateway protocol controller (N4BGPC) 300. The N4BGPC 300 may be an example of a controller. The N4BGPC 300 may be arranged in a segment routing network (SRNW) 20. The communication system 10 includes a segment routing gateway (SRGW) 400. The SRGW 400 may be arranged within the SRNW 20.

The SRGW 400 may have a function of converting an SRv6-compliant packet received from the IP network into a GTP-U-compliant packet. The SRGW 400 may have a function of converting a GTP-U-compliant packet received from the mobile network into an SRv6-compliant packet.

The N4BGPC 300 controls the SRGW 400. The N4BGPC 300 may execute processing regarding routing control of the SRGW 400.

In the example illustrated in Fig. 1, a virtual routing and forwarding (VRF) 202, a VRF 204, a VRF 206, a VRF 208, a VRF 210, and a VRF 220 are arranged in the SRNW 20. Note that a router in which each VRF is realized is not illustrated. The SRGW 400 may include the VRF 210. The SRGW 400 may include the VRF 220. The SRGW 400 may include both the VRF 210 and the VRF 220.

The VRF 202 is connected to a session management function (SMF) 110. The VRF 204, the VRF 206, and the VRF 208 are connected to a user plane function (UPF) 120. The VRF 210 is connected to a gNodeB (gNB) 130. In the example illustrated in Fig. 1, a plurality of VRFs 210 are connected to a plurality of gNBs 130, respectively. The VRF 220 is connected to a data network (DN) 30. In the example illustrated in Fig. 1, a plurality of VRFs 220 are connected to a plurality of DNs 30, respectively.

The N4BGPC 300 acquires information regarding the mobile network from the SMF 110. The N4BGPC 300 acquires, for example, packet forwarding control protocol (PFCP) session information of UE 40 from the SMF 110.

The PFCP session information includes, for example, the address of the UE 40. The PFCP session information includes, for example, the address of the gNB 130 accommodating the UE 40. The PFCP session information includes, for example, the address of the UPF 120 corresponding to the UE 40. The PFCP session information includes, for example, a network instance corresponding to the UE 40. The network instance is information corresponding to slice identification information which allows identification of a slice corresponding to the UE 40 in the mobile network, for example, as an access network instance. The slice identification information is, for example, single-network slice selection assistance information (S-NSSAI). The PFCP session information may include an access network instance. The PFCP session information may include a core network instance. The core network instance is, for example, information corresponding to DN identification information which allows identification of the DN.

The SRGW 400 includes a conversion unit 410 and a conversion unit 450. The conversion unit 410 has a function of converting a GTP-U-compliant packet into an SRv6-compliant packet. The conversion unit 410 may have a function of GTP4.D. The conversion unit 410 may have a function of GTP6.D.

The conversion unit 450 has a function of converting an SRv6-compliant packet into a GTP-U-compliant packet. The conversion unit 450 may have a function of GTP4.E. The conversion unit 450 may have a function of GTP6.E. The conversion unit 450 may have a function of converting an SRv6 packet received at VRF 220 in SRGW 400 to a GTP-U packet.

In the present embodiment, the N4BGPC 300 executes route setting for relaying communication between a user equipment (UE) 40 connected to the gNB 130 and a communication partner connected to the DN 30. The communication partner of the UE 40 may be, for example, an arbitrary communication apparatus such as an arbitrary server on the Internet.

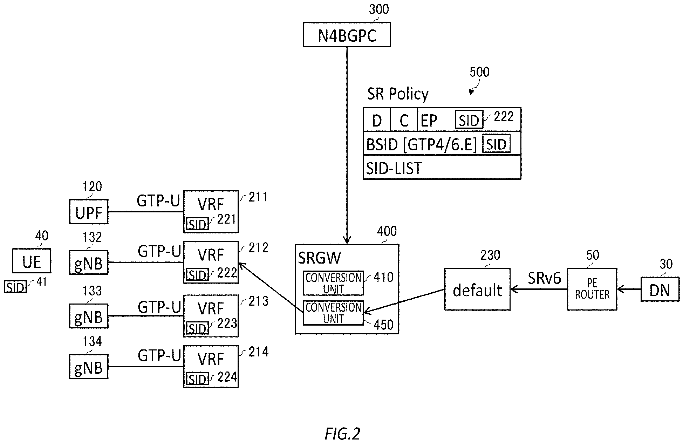

Fig. 2 is an explanatory diagram for explaining processing contents in the communication system 10. In the example illustrated in Fig. 2, a VRF 211 is connected to the UPF 120, a VRF 212 is connected to a gNB 132, a VRF 213 is connected to a gNB 133, and a VRF 214 is connected to a gNB 134.

When the VRF 211, the VRF 212, the VRF 213, and the VRF 214 advertise route information to the N4BGPC 300, the SRGW 400 may perform control so as to advertise information, which allows identification of whether a route is a UPF route or a gNB route, together. For example, when advertising the route information of the UPF 120 to the N4BGPC 300, under the control of the SRGW 400, the VRF 211 advertises information, which allows identification that the route is the UPF route, to the N4BGPC 300 together.

For example, when advertising the route information of the gNB 132 to the N4BGPC 300, under the control of the SRGW 400, the VRF 212 advertises information, which allows identification that the route is the gNB route, to the N4BGPC 300 together. For example, when advertising the route information of the gNB 133 to the N4BGPC 300, under the control of the SRGW 400, the VRF 213 advertises information, which allows identification that the route is the gNB route, to the N4BGPC 300 together. For example, when advertising the route information of the gNB 134 to the N4BGPC 300, under the control of the SRGW 400, the VRF 214 advertises information, which allows identification that the route is the gNB route, to the N4BGPC 300 together.

The SRGW 400 may execute the advertisement of the route information of the VRF 211, the VRF 212, the VRF 213, and the VRF 214 for the N4BGPC 300. In this case, when advertising the route information indicating the route of the gNB to the N4BGPC 300, the SRGW 400 may advertise information, which allows identification that the route is the gNB route, to the N4BGPC 300 together, and when advertising the route information indicating the route of the UPF to the N4BGPC 300, the SRGW 400 may advertise information, which allows identification that the route is the UPF route, to the N4BGPC 300 together.

A packet addressed to the UE 40 from a communication partner of the DN 30 is transferred via a provider edge (PE) router 50 to a default VRF 230. The N4BGPC 300 performs route setting in advance such that the SRGW 400 transfers the packet to the VRF 212 accommodating the UE 40.

The N4BGPC 300 generates an SR policy 500 including information, which indicates a conversion function from the SRv6 to the GTP-U, and an SID 41 for the UE 40 in a binding segment ID (BSID) and including an SID 222 of the VRF 212 corresponding to the gNB 132 accommodating the UE 40 in an end point (EP) of NLRI. The information indicating the conversion function from SRv6 to GTP-U is, for example, GTP4.E or GTP6.E. Then, the N4BGPC 300 notifies the SRGW 400 of the generated SR policy 500.

The conversion unit 450 of the SRGW 400 stores the SR policy 500 notified from the N4BGPC 300. When receiving a packet including the SID 41 for the UE 40, the conversion unit 450 specifies the SID 222 of the VRF 212 corresponding to the SID 41 for the UE 40 on the basis of the stored SR policy 500, and transfers the packet.

As described above, in the communication system 10, the route of the UE 40 can be set by using the EP and the BSID of the SR policy 500. The N4BGPC 300 according to the present embodiment includes, in the EP, the SID 222 of the VRF 212 as information for specifying the VRF 212 corresponding to the gNB 132 accommodating the UE 40. There is also a route distinguisher (RD) as information which allows specification of the VRF 212. However, while the format of the EP is 4 or 16 bytes, the format of the RD is 8 bytes of 2 bytes + 2 or 4 bytes + 4 or 2 bytes, and the formats do not match. On the other hand, since the format of the SID is 16 bytes, the SID matches the EP. That is, there is an advantage that it is possible to specify the VRF corresponding to the gNB accommodating the UE within a standard range by using the SID. There is also an advantage that the setting can be facilitated by the router using the automatically assigned SID at runtime.

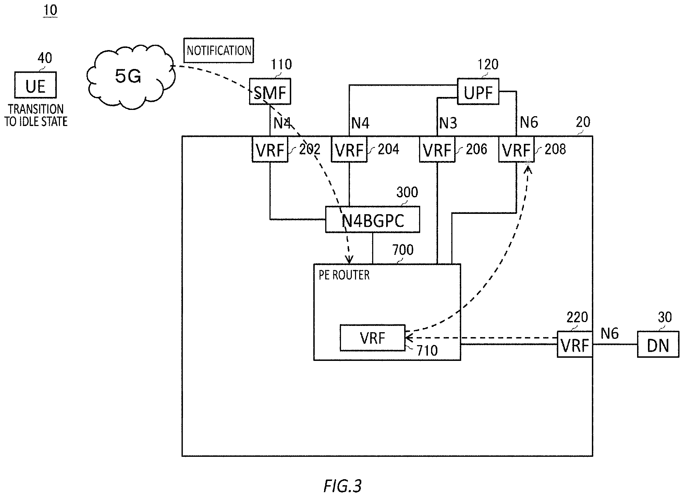

Fig. 3 is an explanatory diagram for explaining the processing contents in the communication system 10. Here, the processing contents regarding paging in the communication system 10 will be described.

In the mobile network, the UPF 120 performs paging. For example, when a packet addressed to the UE 40 arrives after the UE 40 transitions to an idle state, the UPF 120 causes the gNB to call the UE 40 to cause the UE 40 to transition to a state which allows reception of the packet.

In the communication system 10 according to the present embodiment, for example, a function of paging can be installed in a PE router or the like to replace the function of the UPF 120, but there are disadvantages that the PE router becomes expensive, a load of the PE router increases, and the like. In this regard, the PE router 700 according to the present embodiment imports the SID of the VRF 208 corresponding to the UPF 120 as the route of the UPF 120, and transfers the packet, which is addressed to the UE 40, to the UPF 120 via the VRF 208 when receiving the notification of arrival of the packet addressed to the UE 40 via the SMF 110 and the N4BGPC 300.

When the UE 40 transitions to the idle state, the PE router 700 may switch the transfer of the packet addressed to the UE 40 from transfer by longest match to transfer by short prefix route. In the mobile network, the UPF 120 is positioned higher than the UE 40, and is assigned with a higher address. Therefore, in the transfer of the packet addressed to the UE 40, the packet can be transferred to the UPF 120 by switching the transfer by longest match at a normal time to the transfer by short prefix route.

In order for the PE router 700 to switch to the transfer by short prefix route, the N4BGPC 300 may delete, from the PE router 700, a route destined for the UE 40 which has entered the idle state. The N4BGPC 300 may delete the route destined for the UE 40, which has entered the idle state, from the PE router 700 while holding the route inside. This has an advantage that a state where the UE 40 is not disconnected but is in the idle state can be grasped on the SRNW 20 side.

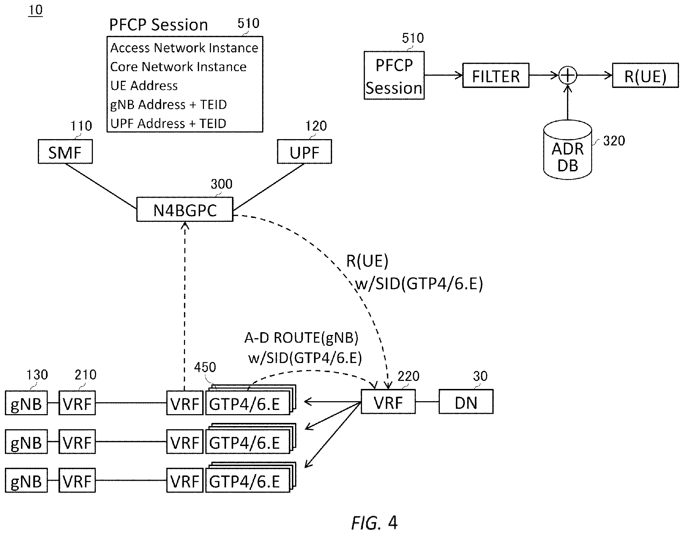

Fig. 4 is an explanatory diagram for explaining the processing contents in the communication system 10. Here, a case will be described in which the N4BGPC 300 transfers the packet addressed to the UE 40 via the conversion unit 450 by setting the route information of the UE 40 in the VRF 220 connected to the DN 30.

In the present example, when receiving the route information of the gNB 130 from the VRF 210, the conversion unit 450 of the SRGW 400 notifies the N4BGPC 300 of an auto discovery(A-D) route including an IP prefix including the address of the gNB 130 in the NLRI, and a SID of the SRGW 400. The conversion unit 450 may include the address of the gNB 130 in the EP of the NLRI. The SID may be indicated as GTP4.E or GTP6.E in an A-D route. If the A-D route includes SID corresponds to VRF 220, the IP prefix including the address of the gNB 130 in the A-D route, the IP prefix may be associated with RD for VRF 220, and the SID may be indicated as End.DT4 or End.DX4 in IPv4 UE address case, or End.DT4 or End.DX4 in IPv6 UE address case. The N4BGPC 300 stores the prefix of the VRF 210 including the notified address of the gNB 130 and the SID of the SRGW 400 in association with each other in an auto-discovery route database (ADRDB) 320. Then, with reference to a PFCP session 510 including the network instance forming a slice, the N4BGPC 300 searches the ADRDB 320 by using, as a key, the address of the gNB 130 included in a PFCP session 510 and when a match is found, advertises the route information of the UE 40 to the VRF 220. The route information of the UE 40 indicates a route for transferring, to the SRGW 400, the packet addressed to the UE 40.

The N4BGPC 300 may add a community attribute to be imported by the VRF 220 to the route information of the UE 40 in order for the VRF 220 to receive the route information of the UE 40 and register the route destined for the UE 40 in the routing table of the VRF 220. The community attribute may be an extended community attribute. The extended community attribute may be a route target.

The N4BGPC 300 may add, to the route information of the UE 40, a community attribute indicating a network slice. The community attribute may be a community attribute corresponding to the access network instance, the S-NSSAI, or a combination of both included in the PFCP session 510. The community attribute may be a color community.

The N4BGPC 300 may add, to the route information of the UE 40, a different community attribute for each core network instance included in the PFCP session 510. The N4BGPC 300 may add, to the route information of the UE 40, a different community attribute for each group of the gNB 130 included in the PFCP session 510. Examples of the group of the gNB 130 include a group for each region in which the gNB 130 is arranged. In addition, examples of the group of the gNB 130 include a group for each company. For example, in a group of the gNB 130 arranged in a site of a certain company, a community attribute corresponding to the group may be added to the UE 40 route information. The N4BGPC 300 may register a community attribute for each group of the gNB 130 in advance. The N4BGPC 300 may register, in advance, which group each of the plurality of gNBs 130 belongs to. The information of the group to which the gNB 130 belongs may be included in the PFCP session 510, and the N4BGPC 300 may specify the group of the gNB 130 by referring to the information. Note that, here, a case has been described in which a different community attribute for each core network instance or for each group of the gNB 130 is added, but, the present invention is not limited thereto, and the N4BGPC 300 may add, to the route information of the UE 40, a different community attribute for each piece of arbitrary information included in the PFCP session 510. The VRF 220 may receive and import the route of the UE 40 to which a community attribute for each purpose such as the core network instance or the gNB group is added.

The N4BGPC 300 may store, as the route information of the UE 40, an IP prefix including the UE address of the UE 40, an IP address of the gNB 130, a tunnel endpoint identifier (TEID), and a QoS flow identifier (QFI) and a reflective QoS indicator (RQI), which are included in the PFCP session 510, in at least one of NLRI or Nexthop-Address in an MP_REACH_NLRI attribute. The N4BGPC 300 may store, as the route information of the UE 40, the IP prefix including the UE address of the UE 40, the IP address of the gNB 130, the TEID, and the QFI and the RQI, which are included in the PFCP session 510, in only the NLRI or the Nexthop-Address in the MP_REACH_NLRI attribute, or may store the IP prefix, the IP address, the TEID, and the QFI and the RQI in both of the NLRI and the Nexthop-Address in a distributed manner. At this time, an SID value itself corresponding to the conversion unit 450 of the SRGW 400 may be stored as GTP4.E or GTP6.E in the Prefix-SID attribute. In addition, a plurality of pieces of MP_REACH_NLRI for other UE 40 having the same Prefix-SID attribute may be stored in one BGP update message. When the SID in the matched A-D route corresponds to VRF 220, the NLRI is VPNv4 Unicast or VPNv6 Unicast address family, and the N4BGPC 300 may store, as the route information of the UE 40, the IP prefix including the UE address of the UE 40 in the NLRI. At this time, an SID value itself corresponding to VRF 220 of the SRGW 400 may be stored as End.DT4, End.DX4, or End.DT6, End.DX6 in the Prefix-SID attribute, without the need to include TEID, gNB address, QFI and RQI in MP_REACH_NLRI or Nexthop-Address.

When the NLRI is VPNv4 Unicast or VPNv6 Unicast address family, the N4BGPC 300 may store TEID (4 bytes), QFI+RQI (1 byte), and 0 (3 bytes) in this order in a leading 8-byte long RD portion, which is typically filled with 0, in the Nexthop-Address. Alternatively, when the NLRI is VPNv4 Unicast or VPNv6 Unicast address family, the N4BGPC 300 may store 0 (3 bytes), TEID (4 bytes), and QFI+RQI (1 byte) in this order in the leading 8-byte long RD portion, which is typically filled with 0, in the Nexthop-Address. The IP address (4 bytes or 16 bytes) of the gNB 130 may be stored in the IP address portion of the Nexthop-Address, and the TEID, and the QFI and the RQI may not be stored in the NLRI. The PE router 50 having the VRF 220 accommodating the DN 30 may receive the route of the UE 40, write the QFI and the RQI, and the TEID in the Argument portion of the SID stored in the Prefix-SID attribute, and update the SID to be used for packet transfer to the IP prefix of the UE 40. When the SID is GTP4.E, the gNB 130 address may also be written in the Argument portion.

When the effective bit length of the TEID is within 16 bits and when the NLRI is VPNv4 Unicast or VPNv6 Unicast address family, the N4BGPC 300 may store QFI and RQI (1 byte) + TEID (2 bytes) in the 24-bit length label portion of the NLRI. In this case, the entire RD portion of the Nexthop-Address may be filled with 0. In addition, in this case, the IP address (4 bytes or 16 bytes) of the gNB 130 may be stored in the IP address portion of the Nexthop-Address. As the transposition of the SID structure of the Prefix-SID attribute, an offset may be designated with a length of 24 bits as the leading bit position of the Argument portion of the SID + the gNB address length, and it may be instructed that the NLRI label portion is SID Argument. The PE router 50 having the VRF 220 accommodating the DN 30 may receive the route of the UE 40, write the address of the gNB 130 (in the case of GTP4.E), the QFI and the RQI, and the TEID in the Argument portion of the SID stored in the Prefix-SID attribute, and update the SID to be used for packet transfer to the IP prefix of the UE 40. In the case of GTP6.E, the IPv6 address of the gNB 130 may be stored as Last-SID in the SRH of the packet to be transmitted to the UE 40.

In the Prefix-SID attribute, the N4BGPC 300 may store an SID value, in which the address (in the case of GTP4.E) of the gNB 130, the QFI and the RQI, and the TEID, which are included in the PFCP session 510, are written in advance, as GTP4.E or GTP6.E in the Argument portion subsequent to the Locator and the Function portion of the SID corresponding to the conversion unit 450 of the SRGW 400. At this time, the N4BGPC 300 may use any existing address family. The N4BGPC 300 may store the IP prefix including the UE address of the UE 40 included in the PFCP session 510 and the IP address of the gNB 130 in the NLRI and the Nexthop-Address in the MP_REACH_NLRI attribute, respectively, and may not store the TEID. The PE router 50 having the VRF 220 accommodating the DN 30 may receive the route information of the UE 40 and use the SID stored in the Prefix-SID attribute as it is for packet transfer to the IP prefix of the UE 40. In the case of GTP6.E, the IPv6 address of the gNB 130 may be stored as Last-SID in the SRH of the packet to be transmitted to the UE 40.

As the route information of the UE 40, an address family may be defined in which the IP prefix including the UE address of the UE 40 included in the PFCP session 510, the IP address of the gNB 130, and the TEID can be stored in the NLRI and the Nexthop in the MP_REACH_NLRI attribute. The new address family to be defined may indicate TEID (4 bytes), QFI+RQI (1 byte), and 0 (3 bytes) + gNB's IP address (4 bytes or 16 bytes) as the encoding of the Nexthop-Address of the MP_REACH_NLRI attribute. Alternatively, 0 (3 bytes), TEID (4 bytes), and QFI+RQI (1 byte) + gNB's IP address (4 bytes or 16 bytes) may be indicated as the encoding of the Nexthop-Address. Alternatively, gNB's IP address (4 bytes or 16 bytes) + QFI and RQI (1 byte) + TEID (2 bytes) + UE IP prefix (4 bytes or 16 bytes) may be indicated as the encoding of the NLRI, and it may be indicated that the Nexthop-Address may be the gNB address. Alternatively, the Nexthop-Address may be a loop-back address of the SRGW to be accommodated. The new address family defines a field indicating a 3GPP (registered trademark) 4G system, a 5G system, or an IETF PMIP system, and may indicate that there is unique encoding for each system indicated by the field.

Accordingly, when a packet addressed to the UE 40 to which a slice is assigned is transmitted from the DN 30, in the VRF 220, the packet can be transferred to the SRGW 400, and in the conversion unit 450, the packet converted from the SRv6 to the GTP-U is transferred to the gNB 130 accommodating the UE 40.

Various types of slices may be assigned to the UE 40. There are a wide variety of slice types, and examples of the types include ultra-high quality, high quality, medium quality, best effort, low latency, and the like, but are not limited thereto.

The conversion unit 450 of the SRGW 400 may include the slice identification information, which allows identification of the slice corresponding to the UE 40, in the color attribute included in the A-D route notified to the N4BGPC 300. The N4BGPC 300 may associate the network instance information, which is included in the PFCP session, corresponding to the slice identification information included in the color attribute. Accordingly, the N4BGPC 300 is allowed to identify the type of slice within a standard range.

The N4BGPC 300 may advertise the route information of the UE 40 to the VRF 220 without searching the ADRDB 320 by using, as a key, the address of the gNB 130 included in the PFCP session 510. When advertising the route of the UE 40 without searching the ADRDB 320, the route of the UE 40 may not have the SID of the SRGW 400.

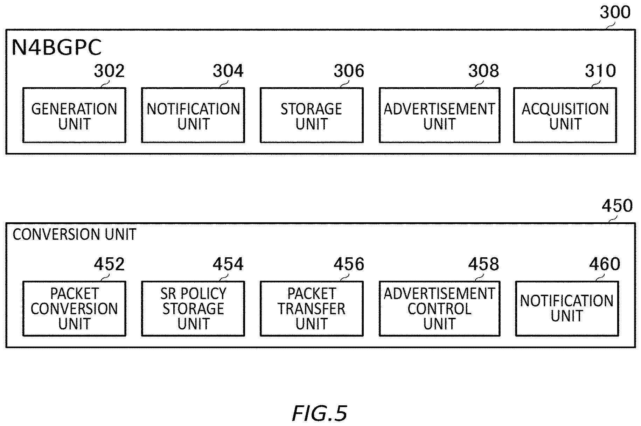

Fig. 5 schematically illustrates an example of a functional configuration of the N4BGPC 300 and the logical configuration of the conversion unit 450. The N4BGPC 300 includes a generation unit 302, a notification unit 304, a storage unit 306, an advertisement unit 308, and an acquisition unit 310. The N4BGPC 300 may include a part without including all of these, or may include configurations other than these. The conversion unit 450 includes a packet conversion unit 452, an SR policy storage unit 454, a packet transfer unit 456, an advertisement control unit 458, and a notification unit 460. The conversion unit 450 may include a part without including all of these, or may include configurations other than these.

A generation unit 302 generates an SR policy including information, which indicates a conversion function from the SRv6 to the GTP-U, and an SID for UE in the BSID and including the SID of the VRF corresponding to the gNB accommodating the UE in the EP of the NLRI. The notification unit 304 notifies the SRGW 400 of the SR policy generated by the generation unit 302.

The packet conversion unit 452 converts an SRv6-compliant packet into a GTP-U-compliant packet. The SR policy storage unit 454 stores the SR policy notified by the notification unit 304. When receiving a packet including the SID for UE, the packet transfer unit 456 specifies the SID of the VRF corresponding to the SID for UE on the basis of the SR policy stored in the SR policy storage unit 454, and transfers the packet.

The packet transfer unit 456 may, as the route of the UPF, import the SID of the VRF corresponding to the UPF, and when receiving the notification of arrival of the packet addressed to the UE, transfer the notification of arrival to the UPF. When the UE transitions to the idle state, the packet transfer unit 456 may switch the transfer of the packet addressed to the UE from the transfer by longest match to the transfer by short prefix route.

The advertisement control unit 458 controls the advertisement of route information to the N4BGPC 300. The advertisement control unit 458 may perform control so as to advertise information, which allows identification that the route is the gNB route, to the N4BGPC 300 together when advertising the route information indicating the route of the gNB to the N4BGPC 300, and advertise information, which allows identification that the route is the UPF route, to the N4BGPC 300 together when advertising the route information indicating the route of the UPF to the N4BGPC 300.

For example, the notification unit 460 notifies the N4BGPC 300 of the A-D route including the IP prefix including the address of the connected (reachable) gNB 130 in the NLRI, and the SID of the SRGW 400. The notification unit 460 may notify the N4BGPC 300 of the A-D route including the slice identification information, which allows identification of the slice corresponding to the UE, in the color attribute. The notification unit 460 may notify the PE router 50 having the VRF 220 of the A-D route.

When adding the SID of the SRGW 400 to the A-D route and notifying the N4BGPC 300, the notification unit 460 may not add the SID of the SRGW 400 to the A-D route to be notified to the PE router 50 having the VRF 220. When adding the SID of the SRGW 400 to the A-D route and notifying the PE router 50, the notification unit 460 may not add the SID of the SRGW 400 to the A-D route to be notified to the N4BGPC 300. The notification unit 460 may add the SID of the SRGW 400 to both A-D routes to be notified to the N4BGPC 300 and the PE router 50.

The notification unit 460 may add, to the route information of the UE 40, a different community attribute for each group of the gNB 130 in the A-D route. Examples of the group of the gNB 130 include a group for each region in which the gNB 130 is arranged. In addition, examples of the group of the gNB 130 include a group for each company. For example, in a group of the gNB 130 arranged in a site of a certain company, a community attribute corresponding to the group may be added to the UE 40 route information. The notification unit 460 may register a community attribute for each group of the gNB 130 in advance. The notification unit 460 may register, in advance, which group each of the plurality of gNBs 130 belongs to.

The storage unit 306 stores the VRF 210 and the SID of the SRGW 400, which are notified by the notification unit 460, in association with each other. The ADRDB 320 may be an example of the storage unit 306. The acquisition unit 310 acquires PFCP session information from the SMF 110. The advertisement unit 308 searches the storage unit 306 by using, as a key, the address of the gNB included in the UE session context in SMF notified when the UE is attached, and when a match is found, advertises the route information of the UE to the router connected to the IP network.

The advertisement unit 308 may advertise the route information of the UE 40 to the VRF 220 connected to the DN 30. The advertisement unit 308 may advertise the route information of the UE 40 to the PE router 50 having the VRF 220 accommodating the DN 30.

The advertisement unit 308 may add a community attribute to be imported by the VRF 220 to the route information of the UE 40 in order for the VRF 220 to receive the route information of the UE 40 and register the route destined for the UE 40 in the routing table of the VRF 220. The community attribute may be an extended community attribute. The extended community attribute may be a route target.

The advertisement unit 308 may add, to the route information of the UE 40, a different community attribute for each core network instance included in the PFCP session 510. The advertisement unit 308 may add, to the route information of the UE 40, a different community attribute for each group of the gNB 130 included in the PFCP session 510. The advertisement unit 308 may add, to the route information of the UE 40, a community attribute corresponding to the access network instance included in the PFCP session 510. The advertisement unit 308 may add, to the route information of the UE 40, a community attribute corresponding to the S-NSSAI included in the PFCP session 510. The advertisement unit 308 may add, to the route information of the UE 40, a community attribute corresponding to both the access network instance and the S-NSSAI included in the PFCP session 510. The N4BGPC 300 may add, to the route information of the UE 40, a different community attribute for each piece of arbitrary information included in the PFCP session 510. The VRF 220 may receive and import the route of the UE 40 to which a community attribute for each purpose such as the core network instance, the gNB group, the access network instance, or the S-NSSAI is added.

The advertisement unit 308 may store, as the route information of the UE 40, the IP prefix including the UE address of the UE 40, the IP address of the gNB 130, the TEID, and the QFI and the RQI, which are included in the PFCP session 510, in at least one of the NLRI or the Nexthop-Address in the MP_REACH_NLRI attribute. At this time, an SID value itself corresponding to the conversion unit 450 of the SRGW 400 may be stored as GTP4.E or GTP6.E in the Prefix-SID attribute. In addition, a plurality of pieces of MP_REACH _NLRI for other UE 40 having the same Prefix-SID attribute may be stored in one BGP update message.

When the NLRI is VPNv4 Unicast or VPNv6 Unicast address family, the advertisement unit 308 may store TEID (4 bytes), QFI+RQI (1 byte), and 0 (3 bytes) in this order in the leading 8-byte long RD portion, which is typically filled with 0, in the Nexthop-Address. Alternatively, when the NLRI is VPNv4 Unicast or VPNv6 Unicast address family, the advertisement unit 308 may store 0 (3 bytes), TEID (4 bytes), and QFI+RQI (1 byte) in this order in the leading 8-byte long RD portion, which is typically filled with 0, in the Nexthop-Address. The advertisement unit 308 may store the IP address (4 bytes or 16 bytes) of the gNB 130 in the IP address portion of the Nexthop-Address, and may not store the TEID, and the QFI and the RQI in the NLRI.

When the effective bit length of the TEID is within 16 bits and when the NLRI is VPNv4 Unicast or VPNv6 Unicast address family, the advertisement unit 308 may store QFI and RQI (1 byte) + TEID (2 bytes) in the 24-bit length label portion of the NLRI. In this case, the advertisement unit 308 may fill the entire RD portion of the Nexthop-Address with 0. In addition, in this case, the advertisement unit 308 may store the IP address (4 bytes or 16 bytes) of the gNB 130 in the IP address portion of the Nexthop-Address. As the transposition of the SID structure of the Prefix-SID attribute, the advertisement unit 308 may designate an offset with a length of 24 bits as the leading bit position of the Argument portion of the SID + the gNB address length, and may instruct that the NLRI label portion is SID Argument.

In the Prefix-SID attribute, the advertisement unit 308 may store an SID value, in which the address (in the case of GTP4.E) of the gNB 130, the QFI and the RQI, and the TEID, which are included in the PFCP session 510, are written in advance, as GTP4.E or GTP6.E in the Argument portion subsequent to the Locator and the Function portion of the SID corresponding to the conversion unit 450 of the SRGW 400. At this time, the advertisement unit 308 may use any existing address family. The advertisement unit 308 may store the IP prefix including the UE address of the UE 40 included in the PFCP session 510 and the IP address of the gNB 130 in the NLRI and the Nexthop-Address in the MP_REACH_NLRI attribute, respectively, and may not store the TEID.

The PE router 50 having the VRF 220 accommodating the DN 30 may receive the A-D route directly from the SRGW 400. The N4BGPC 300 may advertise the UE 40 route to be advertised to the PE router 50 without assigning the SID of the SRGW 400 corresponding to the UE 40. At this time, the PE router 50 may link the SID addressed to the UE 40 included in the A-D route received from the SRGW 400 with the UE route received from the N4BGPC 300.

The PE router 50 having the VRF 220 accommodating the DN 30 may link the SID of the A-D route having the same color community as the color community of the route of the UE 40 with the SID addressed to the UE 40.

The PE router 50 having VRF 220 accommodating the DN 30 may directly receive the A-D route from the SRGW 400 when the N4BGPC 300 stores the IP address of the gNB 130 in the MP_REACH_NLRI of the UE 40 route. At this time, the N4BGPC 300 may advertise the UE 40 route to be advertised to the PE router 50 without assigning the SID of the SRGW 400 corresponding to the UE 40. At this time, the PE router 50 may link the SID addressed to the UE 40 included in the A-D route received from the SRGW 400 with the UE route received from the N4BGPC 300.

The PE router 50 may write the address of the gNB 130, the QFI and the RQI, and the TEID, which are included in the UE route received from the N4BGPC 300, in the Argument portion of the SID included in the A-D route, and may update the SID to be used for packet transfer to the IP prefix of the UE 40.

When the A-D route including the IP address of the gNB 130 disappears from the SRGW 400, the PE router 50 having the VRF 220 accommodating the DN 30 may autonomously delete the route of the UE 40 without waiting for the advertisement of route deletion from the N4BGPC 300. The PE router 50 may delete all UE routes, which are held by the A-D route having disappeared, other than the route of the UE 40 without waiting for the advertisement of route deletion from the N4BGPC 300.

When the A-D route including the IP address of the gNB 130 disappears from the SRGW 400 or when it is determined that the A-D route advertised by an SRGW other than the SRGW 400 is optimal as the A-D route of the route information of the UE 40, the PE router 50 may autonomously link the SID addressed to the UE 40 by the SID of the optimal A-D route without waiting for the advertisement of route update of the UE 40 from the N4BGPC 300. The optimality determination of the A-D route may be performed by, for example, longest-prefix match by Patricia tree.

The PE router 50 may include an ADRDB for searching for the A-D route received from SRGW 400. The ADRDB in the PE router 50 may be a routing table. The routing table of the ADRDB may be a global routing table of the PE router 50. Alternatively, the ADRDB may be the VRF which imports the A-D route by the value of the community attribute added to the A-D route. The PE router 50 may evaluate a value of a community attribute added to the A-D route on the basis of a different community attribute for each group of the gNB 130, which is registered in advance, and import the A-D route to the ADRDB.

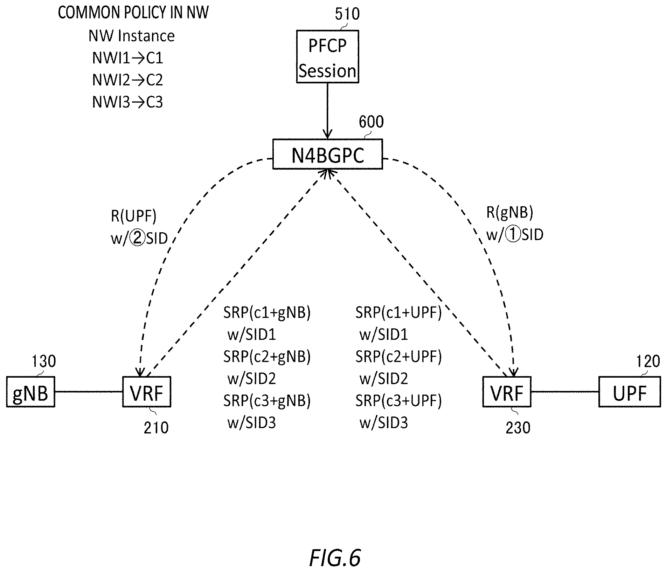

Fig. 6 schematically illustrates an example of another configuration of the communication system 10. The communication system 10 illustrated in Fig. 6 includes an N4BGPC 600. The communication system 10 further includes the VRF 210 and the VRF 230. The VRF 210 may be an example of a first node. The VRF 230 may be an example of a second node.

The VRF 210 includes an SR policy transmission unit which, when connected to the gNB 130, transmits, to the N4BGPC 600, an SR policy including the address of the gNB 130 in the EP of the NLRI, including the slice identification information, which allows identification of a slice, in the color of the NLRI, and including an SID, which corresponds to the slice, in the BSID.

The VRF 230 includes an SR policy transmission unit which, when connected to the UPF 120, transmits, to the N4BGPC 600, an SR policy including the address of the UPF 120 in the EP of the NLRI, including the slice identification information, which allows identification of a slice, in the color of the NLRI, and including an SID, which corresponds to the slice, in the BSID.

The N4BGPC 600 includes a link information storage unit which stores link information which links a network instance with color. The network instance corresponds to a slice. The link information is registered in advance by, for example, an operator, an administrator, or the like of the communication system 10.

The N4BGPC 600 includes an advertisement unit which searches the link information storage unit by using, as a key, color among advertised information, specifies a network instance corresponding to the color, specifies an address of a gNB and an address of a UPF corresponding to the specified network instance, generates a route of the gNB to advertise the route to the VRF 230 corresponding to the UPF 120, and generates a route of the UPF 120 to advertise the route to the VRF 210 corresponding to the gNB 130.

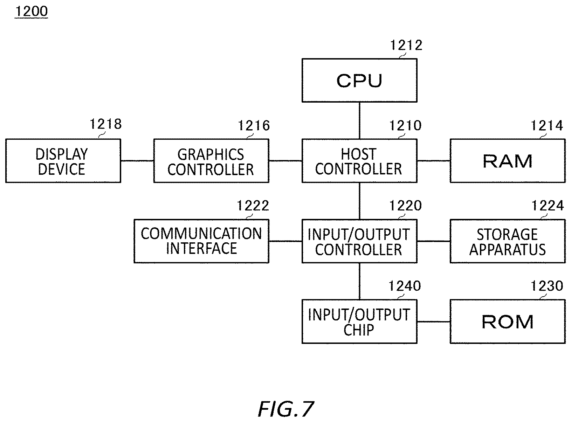

Fig. 7 schematically illustrates an example of a hardware configuration of a computer 1200 that functions as the N4BGPC 300, the SRGW 400, the N4BGPC 600, or the PE router 700. A program installed in the computer 1200 can cause the computer 1200 to function as one or more "units" of an apparatus according to the present embodiment, or cause the computer 1200 to perform operations associated with the apparatus or perform one or more "units" thereof according to the present embodiment, and/or cause the computer 1200 to perform the process according to the present embodiment or perform the steps of the process. Such a program may be executed by a CPU 1212 to cause the computer 1200 to perform particular operations associated with some or all of the blocks in the flowcharts and block diagrams described in the specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage apparatus 1224, a DVD drive and an IC card drive, which are connected to the host controller 1210 via an input/output controller 1220. The DVD drive may be a DVD-ROM drive, a DVD-RAM drive, etc. The storage apparatus 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates according to the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage apparatus 1224 stores a program and data used by the CPU 1212 in the computer 1200. The DVD drive reads the programs or the data from the DVD-ROM or the like, and provides the storage apparatus 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM or the IC card. The program is read from the computer-readable storage medium, installed into the storage apparatus 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. An apparatus or method may be constituted by realizing the operation or processing of information in accordance with the usage of the computer 1200.

For example, in a case where a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage apparatus 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage apparatus 1224, the DVD drive (DVD-ROM), the IC card, etc., and perform various types of processing on the data on the RAM 1214. Then, the CPU 1212 may write the processed data back in the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information retrieval/replacement, or the like described throughout the present disclosure and specified by instruction sequences of the programs, to write the results back to the RAM 1214. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute satisfying a predetermined condition.

The above described program or software modules may be stored in the computer-readable storage medium on or near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are performed or "units" of apparatuses responsible for performing operations. A specific step and "unit" may be implemented by dedicated circuitry, programmable circuitry supplied along with a computer-readable instruction stored on a computer-readable storage medium, and/or a processor supplied along with the computer-readable instruction stored on the computer-readable storage medium. The dedicated circuitry may include a digital and/or analog hardware circuit, or may include an integrated circuit (IC) and/or a discrete circuit. The programmable circuitry may include, for example, a reconfigurable hardware circuit including logical AND, logical OR, logical XOR, logical NAND, logical NOR, and other logical operations, and a flip-flop, a register, and a memory element, such as a field-programmable gate array (FPGA) and a programmable logic array (PLA).

The computer-readable storage medium may include any tangible device capable of storing an instruction performed by an appropriate device, so that the computer-readable storage medium having the instruction stored thereon constitutes a product including an instruction that may be performed in order to provide means for performing an operation specified by a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer-readable instructions may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, and a conventional procedural programming language such as a "C" programming language or a similar programming language.

The computer-readable instruction may be provided to a general purpose computer, a special purpose computer, or a processor or programmable circuitry of another programmable data processing apparatus locally or via a local area network (LAN), a wide area network (WAN) such as the Internet or the like in order that the general purpose computer, the special purpose computer, or the processor or the programmable circuitry of the other programmable data processing apparatus performs the computer-readable instruction to provide means for performing operations specified by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the scope described in the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: communication system; 20: SRNW; 30: DN; 40: UE; 41 SID; 50: PE router; 110: SMF; 120: UPF; 130, 132, 133, 134: gNB; 202, 204, 206, 208, 210, 211, 212, 213, 214, 220, 230: VRF; 222: SID; 300: N4BGPC; 302: generation unit; 304: notification unit; 306: storage unit; 308: advertisement unit; 310: acquisition unit; 320: ADRDB; 400: SRGW; 410: conversion unit; 450: conversion unit; 452: packet conversion unit; 454: SR policy storage unit; 456: packet transfer unit; 458: advertisement control unit; 460: notification unit; 500: SR policy; 510: PFCP session; 600: N4BGPC; 700: PE router; 1200: computer; 1210: host controller; 1212: CPU; 1214: RAM; 1216: graphics controller; 1218: display device; 1220: input/output controller; 1222: communication interface; 1224: storage apparatus; 1230: ROM; and 1240; input/output chip.

## Claims

1. A communication system comprising:
a controller; and
an SR gateway which converts an SRv6-compliant packet received from an IP network into a GTP-U-compliant packet, wherein
the SR gateway includes
a notification unit which notifies the controller, and a router connected to an IP network, of a route information including an IP prefix including an address of a reachable gNB and an SID of the SR gateway in a BGP attribute, and
the controller includes
an advertisement unit which advertises route information of the UE to the router.

2. The communication system according to claim 1, wherein the advertisement unit adds a community attribute to be imported by the router to route information of the UE and advertises the route information to the router, in order for the router to receive the route information of the UE and register a route destined for the UE in a routing table of the router.

3. The communication system according to claim 1 or 2, wherein the advertisement unit stores, as the route information of the UE, an IP prefix including an address of the UE included in information regarding the mobile network, an IP address of the gNB, a TEID, in the UE session information, in at least one of NLRI or Nexthop-Address in an MP_REACH_NLRI attribute.

4. The communication system according to claim 3, wherein the advertisement unit further stores, as the route information of the UE, a QFI, or the QFI and an RQI.

5. The communication system according to any one of claims 1 to 4, further comprising
the router, wherein
the router includes an ADRDB, which is a routing table, for searching for a A-D(Auto-Discovery) route received from the SR gateway.

6. The communication system according to claim 5, wherein the ADRDB is a global routing table of the router.

7. The communication system according to claim 5, wherein the ADRDB is a VRF which imports the A-D route by a value of a community attribute added to the A-D route.

8. The communication system according to claim 5, wherein the router updates an Argument portion of the SID included in the A-D route received from the notification unit by using gNB address and TEID included in the route information of the UE received from the advertisement unit, and generates the SID to be used for packet transfer to the IP prefix of the UE.

9. The communication system according to claim 8, wherein the router updates the Argument portion of the SID included in the A-D route received from the notification unit by using the QFI, or the QFI and the RQI included in the route information of the UE received from the advertisement unit, and generates the SID to be used for packet transfer to the IP prefix of the UE.

10. The communication system according to claim 1, wherein the notification unit notifes the controller and the router connected to an IP network of the A-D route including the IP prefix including the address of the reachable gNB, and the SID of the SR gateway in the BGP attribute.

11. The communication system according to claim 10, wherein the notification unit notifes the controller and the router connected to an IP network of the A-D route including the SID of the SR gateway in BGP attribute of the A-D route, and the IP prefix including the address of the reachable gNB in NLRI of the A-D route.

12. A contoller which advertises route information of UE included in BGP attribute to a router connected to an IP network, wherein the route information of the UE includes an IP prefix including an address of the UE included in information regarding the mobile network, an address of gNB and a TEID.

13. The controller according to claim 12, wherein the route information of the UE further includes a QFI, or the QFI and an RQI.

14. A communication system comprising:
a controller; and
an SR gateway which converts an SRv6-compliant packet received from an IP network into a GTP-U-compliant packet, wherein
the controller includes
an advertisement unit which advertises, to the SR gateway, route informaiton of UE including an address of a gNB to which the UE is connected, and
the SR gateway includes
a route table which receives the route information of the UE and registers a route destined for the UE.
